# EUROPÄISCHE PATENTSCHRIFT

(11) **EP 3 382 865 B1**
(45) Veröffentlichungstag und Bekanntmachung des Hinweises auf die Patenterteilung: **13.05.2020**
(21) Anmeldenummer: 18161195.5
(22) Anmeldetag: 12.03.2018
(51) Int. Cl.: H02K 15/00, H02G 1/00

(54) **SCHNEIDVORRICHTUNG ZUM ABSCHNEIDEN VON DRAHTBÜNDELENDEN UND VERFAHREN ZUR HERSTELLUNG EINES STATORS**
CUTTING DEVICE FOR CUTTING OFF THE ENDS OF WIRE BUNDLES AND METHOD FOR MANUFACTURING A STATOR
DISPOSITIF DE COUPE DESTINÉ À COUPER DES EXTRÉMITÉS DE FAISCEAU DE FILS ET PROCÉDÉ DE FABRICATION D'UN STATOR

(30) Priorität: 30.03.2017 DE 102017003103
(43) Veröffentlichungstag der Anmeldung: 03.10.2018
(73) Patentinhaber: AUDI AG, 85045 Ingolstadt (DE)
(72) Erfinder: Bier, Alexander, 85080 Gaimersheim (DE)

(56) Entgegenhaltungen:
- US-A- 4 856 180
- US-A1- 2007 007 832
- US-B1- 6 557 238

## Beschreibung

Die Erfindung betrifft eine Schneidevorrichtung zum Abschneiden von Drahtbündelenden. Die Erfindung betrifft ferner ein Verfahren zur Herstellung eines Stators für eine elektrische Maschine bei dem eine solche Schneidvorrichtung zum Einsatz kommt.

In der Elektromotorenfertigung, insbesondere in der Fertigung elektrischer Fahr- bzw. Antriebsmotoren für Kraftfahrzeuge, müssen die Drahtbündelenden einer zuvor erzeugten Statorwicklung an den späteren Phasen- und Sternpunktanschlüssen auf eine definierte Länge abgeschnitten werden. (Ein Drahtbündel kann dabei bis zu 200 Einzeldrähte und mehr umfassen.) An den gekürzten Drahtbündelenden können dann Anschlussklemmen für die elektrische Kontaktierung befestigt werden. Gegebenenfalls werden zuvor noch Crimphülsen auf die gekürzten Drahtbündelenden aufgesetzt. Das Abschneiden auf eine vorgegebene Länge ist daher wichtig und muss auch bei beengten Platzverhältnissen prozesssicher ausgeführt werden können. Ferner muss darauf geachtet werden, dass beim Abschneiden bzw. Ablängen keine Drahtstücken (Drahtspäne) in den Stator fallen.

Für das Abschneiden der Drahtbündelenden werden bislang zumeist Zangen, wie z. B. in der DE 1 246 628 B oder der DE 1 615 607 A beschrieben, verwendet.

In der nächstliegenden US 4 856 180 A ist eine Schneidvorrichtung (85) für Anschlussleitungen (75, 75a, 75b) eines Stators (37) beschrieben, die mehrere in einer Matrize (99) ausgebildete Aufnahmenuten (101, 101a, 101b) für die Anschlussleitungen (75, 75a, 75b) aufweist, sowie einen relativ zur Matrize (99) verschiebbaren Schieber (107) mit daran befestigten Abschneidklingen (109, 109a, 109b), die zu den Aufnahmenuten (101, 101a, 101b) ausgerichtet sind. Ferner ist eine federvorgespannte, sich mit den Abschneidklingen (109, 109a, 109b) mitbewegende Abstreifplatte (113) vorgesehen.

Mit der Erfindung soll eine Vorrichtung zum Abschneiden von Drahtbündelenden bereitgestellt werden, die wenigstens einen mit dem Stand der Technik einhergehenden Nachteil nicht oder nur vermindert aufweist und mit der insbesondere das Abfallen abgeschnittener Drahtstückchen verhindert werden kann.

Diese Aufgabe wird gelöst durch die erfindungsgemäße Schneidvorrichtung mit den Merkmalen des Patentanspruchs 1. Mit einem nebengeordneten Patentanspruch 6 erstreckt sich die Erfindung auch auf ein Verfahren zur Herstellung eines Stators für eine elektrische Maschine unter Verwendung einer erfindungsgemäßen Schneidvorrichtung. Bevorzugte Weiterbildungen und Ausgestaltungen der Erfindung ergeben sich analog für beide Erfindungsgegenstände aus den abhängigen Patentansprüchen, aus der nachfolgenden Erfindungsbeschreibung und auch aus der Zeichnung.

Die erfindungsgemäße Schneidvorrichtung zum Abschneiden von Drahtbündelenden umfasst:
- einen Grundkörper, der wenigstens eine Kammer zur Aufnahme eines Drahtbündelendes aufweist; und
- wenigstens ein im Grundkörper verschieblich gelagertes Schneidelement, das eine Klinge und (wenigstens) eine Abdeckung aufweist.

Die Kammer, die Klinge und die Abdeckung bilden beim Schneiden des Drahtbündelendes, d. h. während des Schneidvorgangs und insbesondere zum Ende des Schneidvorgangs, einen geschlossenen Auffangraum.

Beim Schneiden wird das Schneidelement von einer Anfangsposition in eine Endposition (Schneidentstellung) bewegt. Das abgeschnittene Drahtbündelstück kann im Auffangraum sicher aufbewahrt werden, bis das Schneidelement wieder in seine Anfangsposition zurückbewegt wird. Der temporär gebildete Auffangraum fungiert als Auffangbehälter für das abgetrennte Drahtbündelstück bzw. die abgetrennten Drahtstückchen.

Die Kammer ist als eine sich axial erstreckende Nut mit einer Nutöffnung und zwei offenen Nutenden ausgebildet. Das Schneidelement ist so ausgebildet und angeordnet, dass dieses quer zur Nut, d. h. quer zur axialen Erstreckung der Nut, bewegbar ist, derart, dass die Klinge beim Schneiden eines der Nutenden, vorzugsweise das untere Nutende, verschließt und die sich mitbewegende Abdeckung die Nutöffnung verschließt, wodurch ein köcher- bzw. becherartiger Auffangraum gebildet wird. Die Nutöffnung kann mit wenigstens einer Einführschräge und bevorzugt mit zwei Einführschrägen ausgebildet sein, um das Einlegen bzw. Einfädeln eines zu beschneidenden Drahtbündelendes zu erleichtern.

Der Grundkörper kann mehrere Kammern aufweisen, wobei für jede Kammer ein Schneidelement vorgesehen ist. Somit können gleichzeitig mehrere Drahtbündelenden beschnitten werden, wodurch sich ein erheblicher Zeitvorteil ergibt. Bevorzugt sind zwei, drei oder fünf Kammern und Schneidelemente vorgesehen (zwei Sternpunktanschlüsse und/oder drei Phasenanschlüsse). Die Kammern und/oder die Schneidelemente könnten identisch oder unterschiedlich ausgebildet sein. Die Kammern sind als parallele Nuten (s. o.) ausgebildet. Die Schneidelemente können mit einem Schieber verbunden bzw. an einem Schieber befestigt sein und mittels dieses Schiebers gemeinsam bewegt werden. Als Stellantrieb für den Schieber kann bspw. ein Elektromotor, ein Pneumatikzylinder, ein Hydraulikzylinder oder dergleichen vorgesehen sein, der direkt oder indirekt (bspw. mittels Spindeltrieb) mit dem Schieber verbunden sein kann.

Die erfindungsgemäße Schneidvorrichtung kann modular aufgebaut sein. Hierunter wird insbesondere verstanden, dass der Grundkörper aus einzelnen Modulen bzw. Blöcken gebildet ist, die je nach Anforderung kombiniert und bspw. miteinander verschraubt werden.

Die erfindungsgemäße Schneidvorrichtung kann manuell bedient werden oder zwecks Teil- oder Vollautomatisierung an einem Roboterarm befestigt sein. Eine Schneidmaschine kann z. B. einen Mehrachsroboter und eine an dessen Roboterarm befestigte erfindungsgemäße Schneidvorrichtung aufweisen, wobei eine solche Schneidmaschine ebenfalls Gegenstand der Erfindung sein kann. Die erfindungsgemäße Schneidvorrichtung bzw. -maschine ist effizient, robust und zuverlässig. Die Investitions- und Betriebskosten sind vergleichsweise gering.

Die erfindungsgemäße Schneidvorrichtung (oder eine Schneidmaschine, s. o.) kann insbesondere bei der Herstellung eines Stators verwendet werden, allerdings ausdrücklich nicht für das Trennen bzw. Abtrennen eines Wickeldrahts beim Erzeugen der Statorwicklung, sondern für das Ablängen der zu Drahtbündeln zusammengefassten Wickeldrahtenden nachdem die Statorwicklung erzeugt wurde.

Das erfindungsgemäße Verfahren zur Herstellung eines Stators für eine elektrische Maschine, insbesondere für einen Fahr- bzw. Antriebsmotor eines Kraftfahrzeugs, umfasst die Schritte:
- Bereitstellen des Statorkörpers, der insbesondere aus einzelnen Statorblechen (Statorblechpaket) gebildet ist;
- Erzeugen einer Statorwicklung auf dem Statorkörper, bspw. mittels Nadelwickel- oder Einziehtechnik;
- gegebenenfalls Bündeln der Wickeldrahtenden;
- Verlegen der Drahtbündelenden zu wenigstens einer Anschlussstelle;
- Abschneiden der Drahtbündelenden an der Anschlussstelle mithilfe einer erfindungsgemäßen Schneidvorrichtung, wobei die Drahtbündelenden auf vorgegebene Längen eingekürzt werden;
- gegebenenfalls Aufbringen von Crimphülsen auf die gekürzten Drahtbündelenden.

Die Erfindung wird nachfolgend mit Bezug auf die Zeichnung näher erläutert.
- Fig. 1: zeigt in einer Draufsicht eine erfindungsgemäße Schneidvorrichtung.
- Fig. 2: zeigt in einer perspektivischen Darstellung die Schneidvorrichtung der Fig. 1 beim gleichzeitigen Schneiden von drei Drahtbündelenden (Phasenanschlüsse) einer Statorwicklung.

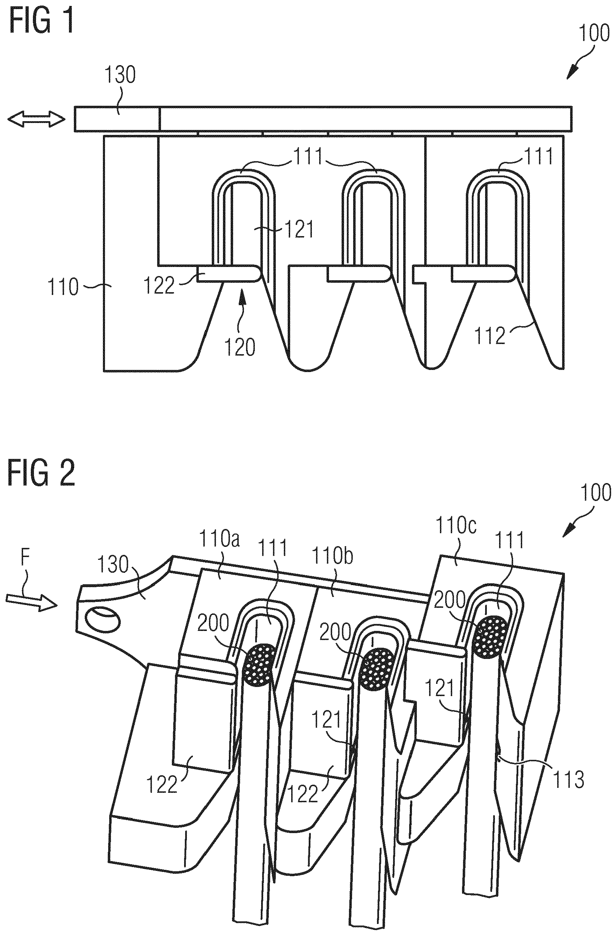

Die in Fig. 1 gezeigte Schneidvorrichtung 100 weist einen Grundkörper 110 auf, der drei kammartig angeordnete Kammern 111 umfasst, die als parallele Nuten mit spitz zulaufenden Einführschrägen 112 ausgebildet sind. Für jede Kammer 111 ist ein Schneidelement 120 vorgesehen, das verschieblich im Grundkörper 110 gelagert ist. Jedes Schneidelement 120 weist eine Klinge 121 und eine Abdeckung 122 auf. Der Grundkörper 110 und die Schneidelemente 120 sind aus einem Stahlmaterial gefertigt. Die Schneidelemente 120 können einstückig oder mehrstückig ausgebildet sein. Die plattenartigen Abdeckungen 122 können bspw. mit den typischerweise gehärteten Klingen 121 verschraubt sein. Die Schneidvorrichtung 100 hat einen kompakten Aufbau und kann daher auch bei beengten Platzverhältnissen optimal eingesetzt werden.

Die drei Schneidelemente 120 sind mit einem Schieber 130 verbunden und können gemeinsam durch Betätigung des Schiebers 130 (wie mit dem Doppelpfeil veranschaulicht) zwischen einer Anfangsposition und der gezeigten Endposition hin- und herbewegt werden. Beim Bewegen in die Endposition durchschneiden die Klingen 121 die in den nutartigen Kammern 111 befindlichen Drahtbündelenden (siehe Fig. 2), wobei die Abdeckungen 122 mitbewegt werden und die Nutöffnungen schottartig verschließen, sodass sich geschlossene Auffangräume für die abgetrennten Drahtbündelstücke bzw. die abgetrennten Drahtstückchen ergeben.

Fig. 2 zeigt die Verwendung der Schneidvorrichtung 100, die sich hierbei in einer bevorzugten Raumlage mit vertikal ausgerichteten Kammern bzw. Nuten 111 befindet. Gut zu erkennen ist hier auch der modulare Aufbau des Grundkörpers 110 aus einzelnen Modulen 110a, 110b und 110c. Die Schneidvorrichtung 100 wird seitlich bzw. horizontal auf die zu schneidenden Drahtbündelenden 200 aufgesetzt, die sich dann mit vertikaler axialer Erstreckung in den Kammern 111 befinden, wie gezeigt.

Durch Aufbringen einer Kraft F auf den Schieber 130 (siehe Pfeil) werden die Schneidelemente 120 von der gezeigten Anfangsposition quer zu den Kammern 111 und den darin befindlichen Drahtbündelenden 200 verschoben, wobei die Klingen 121 die Drahtbündelenden 200 auf unterschiedliche definierte Längen abschneiden und dabei auch die unteren Nutenden verschließen. Gleichzeitig werden die seitlichen Nut- bzw. Kammeröffnungen durch die Abdeckungen 122 verschlossen. Somit bilden sich geschlossene Auffangräume für die abgetrennten Abfallstückchen. Die Schneidvorrichtung 100 kann nun wegbewegt und bspw. über einem Abfallbehälter durch Zurückschieben der Schneidelemente 120 gezielt geöffnet werden. Der Drahtschnitt wird also nach dem Abschneiden sicher aufbewahrt, bis dieser über einer Abwurfposition entsorgt werden kann.

Beim Trenn- bzw. Schneidvorgang werden die Klingen 121 quer (im Wesentlichen horizontal) durch die Nuten bzw. Kammern 111 und die Drahtbündelenden 200 getrieben. Dies wird auch als Messerschneiden bezeichnet. Die Kammergeometrie ermöglicht eine optimale Positionierung der Drahtbündelenden 200 für den Schneidvorgang. Ferner sind die Nut- und die Klingengeometrien so aufeinander abgestimmt, dass die Drahtbündelenden 200 beim Schneiden nicht verschoben und seitlich aus den Kammern bzw. Nuten 111 herausgedrückt werden. Die Klingen 121 können sogar derart geformt sein, dass die Drahtbündelenden 200 beim Schneiden in die Nuten 111 (d. h. in Richtung des Nutgrunds) gedrückt werden. Die den Schneidklingen 121 gegenüberliegenden Nutflanken sind mit Vertiefungen 113 ausgebildet, in die die Schneidklingen 121 eintauchen können, sodass ein vollständiger Trennschnitt ermöglicht wird.

Die Auffangräume der gezeigten Schneidvorrichtung 100 sind von oben einsehbar, wodurch der Schneidvorgang überwacht werden kann. Bei entsprechender Ausgestaltung der Abdeckungen 122 an den Schneideelementen 120 können die Auffangräume auch vollständig geschlossen bzw. verschlossen werden, sodass die Schneidvorrichtung 100 in jeder Raumlage, auch über Kopf, eingesetzt werden kann.

## Patentansprüche

1. Schneidvorrichtung (100) zum Abschneiden von Drahtbündelenden (200) umfassend:
- einen Grundkörper (110), der wenigstens eine Kammer (111) zur Aufnahme eines Drahtbündelendes (200) aufweist, wobei diese Kammer (111) als eine sich axial erstreckende Nut mit einer Nutöffnung und zwei offenen Nutenden ausgebildet ist;
- wenigstens ein im Grundkörper (110) verschieblich gelagertes Schneidelement (120), das quer zur axialen Erstreckung der Nut (111) bewegbar ist und eine Klinge (121) sowie eine Abdeckung (122) aufweist;
wobei die Klinge (121) beim Schneiden des Drahtbündelendes (200) eines der Nutenden verschließt und die sich mitbewegende Abdeckung (122) die Nutöffnung verschließt, sodass die Nut (111), die Klinge (121) und die Abdeckung (122) beim Schneiden des Drahtbündelendes (200) einen geschlossenen Auffangraum bilden, der als Auffangbehälter für das abgetrennte Drahtbündelstück fungiert.

2. Schneidvorrichtung (100) nach Anspruch 1,
**dadurch gekennzeichnet, dass**
die Nutöffnung mit wenigstens einer Einführschräge (112) ausgebildet ist.

3. Schneidvorrichtung (100) nach einem der vorhergehenden Ansprüche,
**dadurch gekennzeichnet, dass**
der Grundkörper (110) mehrere, als parallele Nuten ausgebildete Kammern (111) aufweist und für jede Nut (111) ein Schneidelement (120) vorgesehen ist.

4. Schneidvorrichtung (100) nach Anspruch 3,
**dadurch gekennzeichnet, dass**
die Schneidelemente (120) gemeinsam mittels eines Schiebers (130) betätigbar sind.

5. Schneidvorrichtung (100) nach einem der vorhergehenden Ansprüche,
**dadurch gekennzeichnet, dass**
diese modular aufgebaut ist.

6. Verfahren zur Herstellung eines Stators für eine elektrische Maschine mit den Schritten:
- Bereitstellen des Statorkörpers;
- Erzeugen der Statorwicklung;
- Verlegen der Drahtbündelenden (200) zu wenigstens einer Anschlussstelle;
- Abschneiden der Drahtbündelenden (200) an der Anschlussstelle mithilfe einer Schneidvorrichtung (100) gemäß einem der vorhergehenden Ansprüche, wobei die Drahtbündelenden (200) auf vorgegebene Längen gekürzt werden.

## Claims

1. Cutting device (100) for cutting off the ends of wire bundles (200) comprising:
- a main body (110), which has at least one chamber (111) for receiving an end of a wire bundle (200), wherein said chamber (111) is designed as an axially extending groove with a groove opening and two open groove ends;
- at least one cutting element (120) mounted displaceably in the main body (110), which cutting element can be moved perpendicularly to the axial extension of the groove (111) and has a blade (121) and also a cover (122);
wherein the blade (121) closes off one of the groove ends when cutting the end of the wire bundle (200) and the concurrently moving cover (122) closes off the groove opening so that the groove (111), the blade (121) and the cover (122) form a closed collecting chamber when cutting the end of the wire bundle (200) which collecting chamber functions as a collecting container for the cut-off piece of wire bundle.

2. Cutting device (100) according to claim 1, **characterised in that** the groove opening is designed to have at least one lead-in chamfer (112).

3. Cutting device (100) according to any of the preceding claims, **characterised in that** the main body (110) has a plurality of chambers (111) designed as parallel grooves and for each groove (111) a cutting element (120) is provided.

4. Cutting device (100) according to claim 3, **characterised in that** the cutting elements (120) can be activated jointly by means of a slide (130).

5. Cutting device (100) according to any of the preceding claims, **characterised in that** the latter has a modular structure.

6. Method for producing a stator for an electric machine comprising the steps:
- providing the stator body;
- producing the stator winding;
- placing the ends of the wire bundles (200) up to at least one connection point;
- cutting off the ends of the wire bundles (200) at the connection point by means of a cutting device (100) according to any of the preceding claims, wherein the ends of wire bundles (200) are shortened to predefined lengths.

## Revendications

1. Dispositif de coupe (100) destiné à couper des extrémités de faisceau de fils (200) comprenant :
- un corps de base (110), qui présente au moins une chambre (111) destinée à loger une extrémité de faisceau de fils (200), dans lequel cette chambre (111) est réalisée en tant que rainure s'étendant axialement avec une ouverture de rainure et deux extrémités de rainure ouvertes ;
- au moins un élément de coupe (120) monté mobile dans le corps de base (110), qui peut être déplacé transversalement à l'étendue axiale de la rainure (111) et présente une lame (121) ainsi qu'un couvercle (122) ;
dans lequel la lame (121), lors de la coupe de l'extrémité de faisceau de fils (200), ferme une des extrémités de rainure et le couvercle (122) se déplaçant avec celle-ci ferme l'ouverture de rainure, de sorte que la rainure (111), la lame (121) et le couvercle (122), lors de la coupe de l'extrémité de faisceau de fils (200), forment un espace collecteur fermé, qui fonctionne comme récipient collecteur pour le morceau de faisceau de fils détaché.

2. Dispositif de coupe (100) selon la revendication 1,
**caractérisé en ce que**
l'ouverture de rainure est réalisée avec au moins un chanfrein d'entrée (112).

3. Dispositif de coupe (100) selon l'une quelconque des revendications précédentes, **caractérisé en ce que** :
le corps de base (110) présente plusieurs chambres (111) réalisées en tant que rainures parallèles et un élément de coupe (120) est prévu pour chaque rainure (111).

4. Dispositif de coupe (100) selon la revendication 3,
**caractérisé en ce que**
les éléments de coupe (120) peuvent être actionnés conjointement au moyen d'un coulisseau (130).

5. Dispositif de coupe (100) selon l'une quelconque des revendications précédentes,
**caractérisé en ce que**
celui-ci est de conception modulaire.

6. Procédé pour fabriquer un stator pour une machine électrique avec les étapes :
- de fourniture du corps de stator ;
- de production de l'enroulement de stator ;
- de pose des extrémités de faisceau de fils (200) en au moins un point de raccordement ;
- de coupe des extrémités de faisceau de fils (200) au point de raccordement à l'aide d'un dispositif de coupe (100) selon l'une quelconque des revendications précédentes, dans lequel les extrémités de faisceau de fils (200) sont raccourcies à des longueurs prédéfinies.
